# EUROPÄISCHE PATENTSCHRIFT

(11) **EP 3 180 729 B1**
(45) Veröffentlichungstag und Bekanntmachung des Hinweises auf die Patenterteilung: **16.06.2021**
(21) Anmeldenummer: 15745432.3
(22) Anmeldetag: 27.07.2015
(51) Int. Cl.: G06F 21/33, G06F 21/64, H04L 29/06

(54) **DIGITALE IDENTITÄTEN MIT FREMDATTRIBUTEN**
DIGITAL IDENTITIES WITH FOREIGN ATTRIBUTES
IDENTITÉS NUMÉRIQUES AVEC ATTRIBUTS EXTERNES

(30) Priorität: 15.08.2014 DE 102014111679
(43) Veröffentlichungstag der Anmeldung: 21.06.2017
(73) Patentinhaber: Bundesdruckerei GmbH, 10969 Berlin (DE); CV Cryptovision GmbH, 45886 Gelsenkirchen (DE)
(72) Erfinder: WIRTH, Klaus-Dieter, 12683 Berlin (DE); FILZHUTH, Elke, 12359 Berlin (DE); SCHOLZE, Steffen, 13469 Berlin (DE); MÜLLER, Frank, 10407 Berlin (DE); SCHWAN, Matthias, 10437 Berlin (DE); HESSE, Danny, 10785 Berlin (DE); MAI, Thomas, 46236 Bottrop (DE); LOHOFF, Ansgar, 45879 Gelsenkirchen (DE)
(74) Vertreter: Richardt Patentanwälte PartG mbB
(86) Internationale Anmeldenummer: PCT/EP2015/067150
(87) Internationale Veröffentlichungsnummer: WO 2016/023739

(56) Entgegenhaltungen:
- DE-A1-102008 042 582
- DE-A1-102010 030 590
- DE-A1-102012 215 630

## Beschreibung

### Technisches Gebiet

Die nachfolgenden Darstellungen betreffen das Gebiet der datentechnischen Realisierung verkörperter digitaler Identitäten und insbesondere die Erweiterung von Attributen im Speicher eines ID-Tokens in einer Hierarchie von digital codierten Vertrauensstellungen.

Aus dem Stand der Technik sind verschiedene Verfahren zur Realisierung der so genannten digitalen Identität einer Person bekannt. Digitale Identitäten werden u.a. zur datentechnischen Darstellung von rechtlich verpflichtenden Transaktionen benötigt. Das Grundprinzip einer digitalen Identität besteht darin, der damit auszustattenden Person die ausschließliche Möglichkeit zu verschaffen, ein bestimmtes Protokoll zur Feststellung der Identität erfolgreich abschließen zu können. Typisch werden digitale Identitäten in der Art einer Dreiecksbeziehung realisiert. Ein ID-Provider als Herausgeber der digitalen Identität verschafft der betreffenden Person die Möglichkeit ein von einem Dritten durchgeführtes Protokoll zur Feststellung der Identität erfolgreich abschließen zu können. Der Dritte vertraut dabei auf die Integrität des ID-Providers. Digitale Identitäten können nicht-verkörpert als Daten ohne Bindung an ein Erzeugungs- oder Speichermedium realisiert sein. Eine bessere Sicherheit gegen Missbrauch bieten verkörperte digitale Identitäten, die für eine Teilnahme an dem Protokoll zur Feststellung der Identität den Besitz einer Vorrichtung voraussetzen. Diese Vorrichtung wird als ID-Token bezeichnet. In einem geschützten Speicher des ID-Tokens werden die digital codierten Angaben zur Beschreibung und Überprüfung der damit abgesicherten Identität als sog. Attribute gespeichert.

Aus der Druckschrift US 6,257,486 B1 sind eine Vorrichtung und ein Verfahren zum Lesen eines als Smartcard realisierten ID-Tokens bekannt, wobei die Smartcard Attribute speichert und einem Nutzer zugeordnet ist. Die Smartcard beinhaltet ferner ein Tastenfeld, um dem Benutzer die Eingabe einer PIN zu ermöglichen.

Aus der Druckschrift DE 10 2008 000 067 A1 ist ein Verfahren zum Lesen eines in einem ID-Token gespeicherten Attributs bekannt, wobei das ID-Token einem Inhaber persönlich zugeordnet ist, mit Schritten zur Authentifizierung des Inhabers gegenüber dem ID-Token, zur Authentifizierung eines ID-Providers gegenüber dem ID-Token, zum Lesezugriff des ersten ID-Providers auf das Attribut und zur Übertragung des Attributs an ein zweites Computersystem eines Dienstanbieters.

Die DE 10 2008 042 582 A1 offenbart ein Telekommunikationsverfahren mit folgenden Schritten: Aufbau einer ersten Verbindung zwischen einem ersten ID-Token und einem ersten Computersystem über ein zweites Computersystem zum Auslesen zumindest eines ersten Attributs aus dem ersten ID-Token, Generierung eines ersten Softtokens, wobei der erste Softtoken das zumindest eine erste Attribut und eine Zeitangabe beinhaltet und wobei der erste Softtoken von dem ersten Computersystem signiert ist, Senden des ersten Softtokens von dem ersten Computersystem an ein drittes Computersystem, wobei es sich bei der ersten Verbindung um eine Verbindung mit Ende-zu-Ende-Verschlüsselung handelt.

Allerdings bietet insbesondere das vorangehend skizzierte Verfahren keine Möglichkeit, die in dem ID-Token gespeicherten Attribute durch solche zu ergänzen, die nicht unmittelbar durch die Vertrauensstellung des ID-Providers abgesichert sind.

Eine Aufgabe kann mithin darin gesehen werden, ein Verfahren mit erweiterten Möglichkeiten zur Nutzung von Attributen in ID-Token Verfügung zu stellen.

### Zusammenfassung der Erfindung

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Grundlegend vorgeschlagenen wird ein Verfahren zur Erweiterung von Attributen im Speicher eines ID-Tokens innerhalb einer Hierarchie von digitalen codierten Vertrauensstellungen durch Bereitstellen des ID-Tokens, wobei das ID-Token mit einem Speicher, einer externen Schnittstelle, Einrichtungen zur Authentifizierung über die externe Schnittstelle und Einrichtungen zum lese- und schreibgeschützten Zugriff auf den Speicher über die externe Schnittstelle ausgestattet ist, durch Schritte zum Vermitteln einer digital codierten Vertrauensstellung zum Schreiben eines Fremdattributs in den Speicher des ID-Tokens durch einen ID-Provider-Computer an einen Fremdattribut-Provider-Computer, zum Durchführen eines kryptografischen Protokolls zur Authentifizierung des ID-Tokens gegenüber dem Fremdattribut-Provider-Computer und zum Nachweis der digital codierten Vertrauensstellung und zum Schreiben eines Fremdattributs in den Speicher des ID-Tokens über dessen externe Schnittstelle durch den Fremdattribut-Provider-Computer. Das Verfahren umfasst weiterhin die Nutzung des Fremdattributs für eine Transaktion zwischen einem mit dem ID-Token über dessen externe Schnittstelle verbundenen Terminal-Computer und einem Dienst-Computer und umfasst Schritte zum Vermitteln einer digital codierten Vertrauensstellung zum Lesen des Fremdattributs aus dem Speicher des ID-Tokens durch den ID-Provider-Computer an den Dienst-Computer, zum Anfordern der Transaktion durch den Terminal-Computer bei dem Dienst-Computer, zum Durchführen eines kryptografischen Protokolls über die externe Schnittstelle des ID-Tokens zur Authentifizierung des ID-Tokens gegenüber dem Terminal-Computer und/oder dem Dienst-Computer, zum Nachweis der Vertrauensstellung zum Lesen des Fremdattributs und Lesen des Fremdattributs aus dem Speicher des ID-Tokens über die externe Schnittstelle durch den Dienst-Computer und zum Ausführen der Transaktion durch den Dienst-Computer.

Der Begriff "ID-Token" wird verwendet für ein tragbares elektronisches Gerät, das zumindest einen Speicher zur Speicherung von digitalen codierten Attributen des rechtmäßigen Inhabers und eine Kommunikations-Schnittstelle zum Auslesen dieser Daten aufweist. Vorzugsweise handelt es sich um einen gesicherten Speicherbereich, um zu verhindern, dass die in dem Speicherbereich gespeicherten Daten in unerlaubter Weise verändert oder ohne die dafür erforderliche Berechtigung ausgelesen werden. Über den Besitz eines ID-Tokens kann bei Vermutung der Rechtmäßigkeit auf eine bestimmte Vertrauensstellung geschlossen werden. Vorzugsweise wird die Rechtmäßigkeit des Besitzes des ID-Tokens nicht ohne weiteres vermutet. In den typischen Anwendungsfällen wird darauf über einen zusätzlichen Authentifizierungsschritt geschlossen. Dies kann ein individuell bei dem rechtmäßigen Besitzer oder Benutzer vorhandenes Wissen sein, bspw. eine Kennzahl (PIN), ein Kennwort oder eine Antwort auf eine Sicherheitsfrage. Alternativ kann die Authentifizierung über das Nachprüfen zuverlässig abtastbarer individueller Eigenschaften des rechtmäßigen Besitzers erfolgen. Dies kann bspw. die Erfassung und den Vergleich biometrischer Daten umfassen. Insbesondere kann es sich bei dem ID-Token um eine Smartcard oder ein elektronisches Sicherheitsdokument handeln. Elektronische Sicherheitsdokumente in diesem Verständnis sind beispielsweise elektronische Ausweisdokumente, insbesondere Reisepässe, Personalausweise, Aufenthaltstitel und Visa, Führerscheine, Firmenausweise, Gesundheitskarten, personalisierte Zahlungsmittel, insbesondere Bankkarten, Geldkarten und Kreditkarten.

Der Begriff "externe Schnittstelle" wird hinsichtlich eines ID-Tokens verwendet für jede technische Einrichtung zum Austausch von Daten zwischen dem ID-Token und einer davon getrennten Datenverarbeitungseinrichtung. Beispiele für externe Schnittstellen eines ID-Tokens sind die aus den Bank- und Kreditkarten bekannten Kontaktfelder und die aus den Bereich der elektronischen Ausweisdokumente bekannten RFID-Transceiver zur hochfrequenten drahtlosen digitalen Signalübertragung.

Der Begriff "Fremdattribut" wird verwendet für ein digital im Speicher eines ID-Tokens codiertes Attribut, das anders als alle ursprünglich und unveränderlich gespeicherten Attribute, nämlich die sog. Stammattribute, nicht unmittelbar die Vertrauensstellung des ID-Providers genießt. Die Realisierung von Fremdattributen setzt voraus, dass wenigstens ein Teil des Speichers in dem ID-Token noch nach dessen Ausstellung und Herausgabe an den Inhaber beschreibbar ist. Fremdattribute können einen bequemen Weg bieten, um beispielsweise anonyme oder pseudonyme Zusicherungen im digitalen Geschäftsverkehr zu verwirklichen. Beispielsweise kann eine Bonitätsbewertung des Inhabers des ID-Tokens als Fremdattribut gespeichert werden. Falls diesem Fremdattribut eine angemessene Vertrauensstellung vermittelt wird, kann damit eine Anfrage bei einer Wirtschaftsauskunftei über die als Stammattribute gespeicherten persönlichen Daten des Inhabers des ID-Tokens vermieden werden. Weiterhin kann durch ein Fremdattribut eine pseudonyme Nutzung von Dienstleistung ermöglicht werden. In einer exemplarischen Situation könnte auf einem ID-Token durch ein Fremdattribut die Berechtigung des Inhabers zur Nutzung eines Nah- oder Fernverkehrsnetzes für einen bestimmten Zeitraum codiert sein. Dadurch kann bei einer Überprüfung die über die Identität ausgeführte Anfrage an eine Datenbank des Verkehrsnetzes vermieden werden.

Der Begriff "ID-Provider" wird verwendet für einen Datenverarbeitungsdienst mit einer herausgehobenen Vertrauensstellung. Diese Vertrauensstellung kann der ID-Provider verkörperten oder nicht-verkörperten digitale Daten durch geeignete technische Maßnahmen und insbesondere kryptografische Verfahren vermitteln. Insbesondere leitet sich die Vertrauensstellung eines ID-Tokens im Sinne der vorangehenden Begriffsklärung von der Vertrauensstellung des herausgebenden ID-Providers ab. Zweckmäßig stellt der ID-Provider weiterhin Dritten gegenüber Mittel und/oder datentechnische Dienste zur Verfügung, um den Nachweis der vermittelten Vertrauensstellung durch eine Rückverfolgung in Bezug auf bestimmte nicht-verkörperte Daten oder ein bestimmtes ID-Token zu erlauben. Dazu kann beispielsweise der ID-Provider an einem Protokoll zur Authentifizierung des ID-Tokens teilnehmen oder einen kryptografischen Schlüssel zur Prüfung der Gültigkeit einer digitalen Signatur auf nicht-verkörperten Daten herausgeben. Bei einem ID-Provider kann es sich insbesondere um ein TrustCenter oder eine Zertifizierungsstelle (Certificate Authority, CA) in einer sog. Public-Key-Infrastruktur handeln, die ein bekanntes Beispiel für eine Hierarchie von digital codierten Vertrauensstellungen bietet. Innerhalb einer Hierarchie vom digital codierten Vertrauensstellungen kann die "Vermittlung" der digital codierten Vertrauensstellung von der höchsten Ebene an die darunter liegenden durch Mittel der digitalen Datenverarbeitung vorgesehen sein. Im erwähnten Beispiel der Public-Key-Infrastruktur wird diese Vermittlung durch digitale Signaturen realisiert, deren Echtheit bis zur höchsten Ebene zurück verfolgbar ist. Dementsprechend ist für den Nachweis einer Vertrauensstellung dort nur eine unverfälschte Kopie des Prüfschlüssels der höchsten Ebene erforderlich. Mitunter ist in einer Hierarchie digital codierter Vertrauensstellungen die übergeordnete Instanz in den Nachweis einer vermittelten Vertrauensstellung einbezogen. Im erwähnten Beispiel der Public-Key-Infrastruktur ist dies in der Regel jedoch nur als Anfrage an eine Sperrliste der höchsten Ebene realisiert. Der Begriff "ID-Provider-Computer" wird verwendet für eine Datenverarbeitungseinrichtung, die den als ID-Provider bezeichneten Datenverarbeitungsdienst ausführt oder zu dessen Ausführung eingerichtet ist.

Der Begriff "Fremdattribut-Provider" wird verwendet für einen vom ID-Provider getrennten Datenverarbeitungsdienst, der durch datentechnische Mittel dem Inhaber eines ID-Tokens in Bezug auf darin gespeicherte Fremdattribute eine Vertrauensstellung vermittelt. Hinsichtlich der initial und unveränderlich gespeicherten Stammattribute erfüllt der ID-Provider als Herausgeber des ID-Token prinzipiell die Funktion eines Attribut-Providers. Dabei genießt der ID-Provider offensichtlich die höchste mögliche Vertrauensstellung, weil das Vertrauen in Bezug auf die eigenen Inhalte naturgemäß uneingeschränkt ist. Der Begriff "Fremdattribut-Provider-Computer" wird verwendet für eine Datenverarbeitungseinrichtung, die den als Fremdattribut-Provider bezeichneten Datenverarbeitungsdienst ausführt oder zu dessen Ausführung eingerichtet ist.

Ferner bezeichnet der Begriff "Terminal-Computer" insbesondere einen Personal Computer (PC), Laptop-Computer oder ein anderer Computer eines Nutzers, der zur Durchführung eines Anmelde- oder Registrierungsvorgangs über ein Netzwerk gegenüber einem Dienst-Computer geeignet ist. Ein Terminal-Computer muss kein persönlicher Computer des Nutzers sein. Die Möglichkeit zur Nutzung des Terminal-Computers darf für die Zwecke der vorliegenden Definitionen und Erläuterungen nicht als Hinweis oder Indiz für eine Authentizität oder Vertrauensstellung des Nutzers verstanden werden. Vorangehend und in der weiteren Beschreibung bezeichnet der Begriff "Netzwerk" ein Kommunikationsnetzwerk zum Austausch von Daten zwischen Computern, wie zum Beispiel das Internet.

Ein möglicher Vorteil des vorangehend definierten grundlegenden Verfahrens kann darin gesehen werden, dass der ID-Provider dem Fremdattribut-Provider durch eine einmalige initiale Maßnahme eine digital codierte Vertrauensstellung im Verhältnis zu dem ID-Token vermitteln kann.

In einer Ausgestaltung des vorangehend definierten grundlegenden Verfahrens wird als Voraussetzung für das Schreiben des Fremdattributs durch den Fremdattribut-Provider-Computer eine Negativprüfung auf Daten eines ID-Providers-Computer verwalteten ID-Token-Sperrliste durchgeführt.

In einer weiteren, eigenständigen Ausgestaltung der vorangehend definierten Verfahren wird die digital codierte Vertrauensstellung zum lesenden und/oder schreibenden Zugriff auf den Speicher des ID-Tokens durch Übermittlung digitaler Lese- bzw. Schreibberechtigungszertifikate vermittelt und/oder nachgewiesen und das ID-Token mit Einrichtungen zum Prüfen der Lese- bzw. Schreibberechtigungszertifikate bereitgestellt.

Ein möglicher Vorteil dieser Ausgestaltung kann darin gesehen werden, dass dadurch die in vielen Implementierungen von ID-Token bereits angelegten Mittel zum Prüfen von Zertifikaten in bestimmten standardisierten Formaten genutzt werden.

Eine weitere, eigenständige Ausgestaltung der vorangehend definierten Verfahren umfasst zusätzlich den Nachweis der Berechtigung zum Lesen einer Menge von Stammattributen aus dem Speicher des ID-Tokens und das Lesen dieser Stammattribute durch den Fremdattribut-Provider-Computer und/oder den ID-Provider-Computer.

In einer Weiterbildung der vorangehenden Ausgestaltung kann das Schreiben des Fremdattributs in Abhängigkeit von den gelesenen Stammattributen erfolgen. Insbesondere kann vorgesehen sein, das Fremdattribut gemäß den gelesenen Stammattributen zu erzeugen.

Ein Vorteil dieser Ausgestaltungen kann sich daraus ergeben, dass der Fremdattribut-Provider auf dem ID-Token gespeicherte Stammattribute nur im Umfang der vom ID-Provider gewährten Zugriffsrechte auslesen kann. Damit können Datenspuren des Nutzers beim Fremdattribut-Provider verhindert werden.

Der Begriff "Transaktion" wird dabei verwendet als Verallgemeinerung für eine zusammenhängende Folge von Datenverarbeitungsvorgängen zur Abbildung eines Rechtsgeschäfts, Geschäftsvorfalls oder einer ähnlichen vorübergehenden Austauschbeziehung. Bekannte Beispiele für Transaktionen sind online und insbesondere über das Internet ausgeführte Rechtsgeschäfte, insbesondere Bestellungen, Buchungen, Reservierungen und Banküberweisungen von Konsumenten. Beispiele für Transaktionen, die keine Rechtsgeschäfte abbilden, sind die Teilnahme an unverbindlichen Online-Spielen oder Online-Verlosungen, der Versand von Emails sowie das Einstellen von Dateien in Online-Speicherdienste. Außerdem kann eine Transaktion einen Teilvorgang in einer Freischaltung oder Inbetriebnahme von persönlichen Mietgegenständen bilden, beispielsweise im Rahmen der Entsperrung von Mietfahrzeugen oder Schließfächern.

Der Begriff "Dienst-Computer" bezeichnet dabei insbesondere einen Computer oder eine Rechenanlage, die ein Anbieter für geschäftliche oder ähnliche Transaktionen nutzt. Insbesondere wird mit dem Begriff "Dienst-Computer" ein Computersystem bezeichnet, das über eine Verbindung mit dem Netzwerk verfügt, sodass beispielsweise mithilfe eines Internetbrowsers auf von dem Dienst-Computer gespeicherte oder generierte Internetseiten zur Ausführung der Transaktionen zugegriffen werden kann.

Ein möglicher Vorteil dieser Ausgestaltung kann darin gesehen werden, dass der Fremdattribut-Provider dem Nutzer des ID-Tokens eine Vertrauensstellung gegenüber dem Dienst zur Durchführung einer Transaktion vermitteln kann, ohne selbst in diese Transaktion einbezogen zu sein. Die Verwendung der Vertrauensstellung durch den Nutzer erzeugt beim Fremdattribut-Provider folglich keine informationstechnischen Spuren. Die Vertrauensstellung beruht auf dem Vorhandensein und der Vertrauenswürdigkeit des ID-Tokens.

In einer weiteren, eigenständigen Ausgestaltung der vorangehend definierten Verfahren wird als Voraussetzung für das Lesen des Fremdattributs durch den Dienst-Computer eine Negativprüfung auf Daten einer vom ID-Provider-Computer verwalteten ID-Token-Sperrliste und/oder einer vom Fremdattribut-Provider-Computer verwalteten Fremdattribut-Sperrliste durchgeführt.

Ein möglicher Vorteil dieser Ausgestaltung kann darin gesehen werden, dass ein Entzug der Vertrauensstellung im Zusammenhang mit dem Lesen des Fremdattributs erkannt wird. Ein alleiniger Zugriff auf eine Sperrliste des Fremdattribut-Providers bietet dabei den Vorteil, dass keine Informationen über das Lesen des Fremdattributs an den ID-Provider gelangen.

Eine eigenständige Ausgestaltung der vorangehenden Verfahren umfasst ferner das Vermitteln einer digital codierten Vertrauensstellung zum Lesen einer Menge von Stammattributen aus dem Speicher des ID-Tokens durch den ID-Provider-Computer an den Dienst-Computer sowie den Nachweis dieser Vertrauensstellung durch den Dienst-Computer gegenüber dem ID-Token und das Lesen dieser Stammattribute durch den Dienst-Computer als Voraussetzung für die Ausführung der angeforderten Transaktion. Insbesondere können dabei die durch die vom ID-Provider vermittelte Vertrauensstellung unterstützen Zugriffsrechte des Dienst-Computers so ausgestaltet sein, dass auf dem ID-Token gespeicherte Stammattribute nur in einem vorgegebenen Umfang ausgelesen werden können.

Ein möglicher Vorteil dieser Ausgestaltung kann darin gesehen werden, dass damit über die Erfordernisse der Transaktion hinaus gehende Datenspuren des Nutzers beim Dienst-Computer vermeidbar sind. Insbesondere können in der Transaktion zwischen ID-Token und Dienst-Computer digitale Identitäten verwendet werden, die nicht an andere Identitäten des Nutzers gebunden sind.

In einer weiteren, eigenständigen Ausgestaltung der vorangehend definierten Verfahren wird als Voraussetzung für das Lesen des Fremdattributs durch den Dienst-Computer weiterhin eine Authentifizierung des Terminal-Computers und/oder des Dienst-Computers gegenüber dem ID-Token durchgeführt.

Ein möglicher Vorteil dieser Ausgestaltung kann darin gesehen werden, dass die vom Fremdattribut-Provider-Computer und/oder dem Dienst-Computer an die Schnittstelle zum ID-Token übermittelten Schreib- und Leseberechtigungszertifikate nicht durch eine Fälschung der Kommunikation abgegriffen werden können.

In einer weiteren, eigenständigen Ausgestaltung der vorangehend definierten Verfahren wird als Voraussetzung für das Abschließen der Transaktion die Gültigkeit des gelesenen Fremdattributs durch den Dienst-Computer festgestellt.

In einer weiteren, eigenständigen Ausgestaltung der vorangehend definierten Verfahren umfasst das Feststellen der Gültigkeit des Fremdattributs die erfolgreiche Überprüfung einer digitalen Signatur des Fremdattributs.

In einer weiteren, eigenständigen Ausgestaltung der vorangehend definierten Verfahren umfasst das Feststellen der Gültigkeit die Ausführung eines Protokolls zwischen dem Dienst-Computer und dem Fremdattribut-Provider-Computer und insbesondere eine Negativprüfung auf Daten einer vom Fremdattribut-Provider-Computer verwalteten Fremdattribut-Sperrliste umfasst.

Ein möglicher Vorteil dieser Ausgestaltung kann wiederum darin gesehen werden, dass ein Entzug der Vertrauensstellung im Zusammenhang mit dem Lesen des Fremdattributs unbedingt erkannt wird. Der alleinige Zugriff auf eine Sperrliste des Fremdattribut-Providers bietet dabei den Vorteil, dass keine Informationen über das Lesen des Fremdattributs an den ID-Provider gelangen.

In einer weiteren, eigenständigen Ausgestaltung der vorangehend definierten Verfahren wird als Voraussetzung für das Lesen des Fremdattributs durch den Dienst-Computer weiterhin eine persönliche Authentifizierung des Nutzers gegenüber dem ID-Token über eine Erfassungseinrichtung des Terminalcomputers ausgeführt wird. Ein möglicher Vorteil dieser Ausgestaltung kann darin gesehen werden, dass dadurch die Nutzung des Fremdattributs unter die Voraussetzung einer rechtmäßigen Benutzung des ID-Tokens gestellt wird.

Weiterhin grundlegend vorgeschlagen wird ein Computerprogrammprodukt, insbesondere ein digitales Speichermedium mit digital codierten Instruktionen, durch deren Ausführung ein Datenverarbeitungssystem entsprechend einem der vorangehend definierten Verfahren betreibbar ist.

### Figuren

Exemplarische Vorrichtungen und Verfahren zur Erweiterung von Attributen im Speicher eines ID-Tokens innerhalb einer Hierarchie von digital codierten Vertrauensstellungen sind in den anhängenden Zeichnungen veranschaulicht. Darin zeigen:
- Fig. 1: ein exemplarisches Datenverarbeitungssystem zur Ausführung der exemplarischen ersten und zweiten Verfahren;
- Fig. 2: einen ersten grundlegenden gemeinsamen Teil aus beiden exemplarischen Verfahren mit Abschnitten zur Initialisierung;
- Fig. 3: einen zweiten grundlegenden Teil aus einem ersten exemplarischen Verfahren mit Abschnitten zur Ausführung einer Transaktion; und
- Fig. 4: einen zweiten grundlegenden Teil aus einem ersten exemplarischen Verfahren mit Abschnitten zur Ausführung einer Transaktion.

### Beschreibung exemplarischer Realisierungen

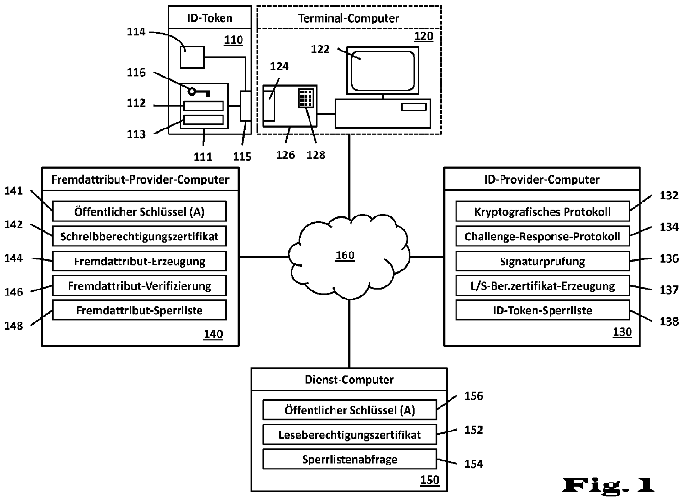

Gemäß Fig. 1 umfasst ein exemplarisches Datenverarbeitungssystem, das für die Durchführung von bevorzugten exemplarischen Verfahren zur Erweiterung von Attributen im Speicher eines ID-Tokens 110 innerhalb einer Hierarchie von digitalen Vertrauensstellungen geeignet ist, weiterhin einen Terminal-Computer 120, einen ID-Provider-Computer 130, eine Fremdattribut-Provider-Computer 140 und einen Dienst-Computer 150. Ein Netzwerk 160 ermöglicht zumindest Verbindungen zum paarweisen Austausch von Daten zwischen dem Terminal-Computer 120 und dem Dienst-Computer 150, dem Dienst-Computer 150 und dem Fremdattribut-Provider-Computer 140 sowie dem Fremdattribut-Provider-Computer-140 und dem ID-Provider-Computer 130. Bei dem Netzwerk 160 kann es sich um ein gemeinsames Netzwerk und insbesondere um das Internet handeln.

Das ID-Token 110 ist insbesondere ein persönliches ID-Token des Inhabers und dementsprechend dazu vorgesehen, einen vertrauenswürdigen Rückschluss auf dessen Berechtigung unter bestimmten Aspekten zu ermöglichen. Das persönliche ID-Token 110 enthält dazu einen Speicher 111 zum Speichern von Attributen 112, 113. Ein Teil davon sind erste Attribute 112, die von Anfang an in dem Speicher 111 vorhanden sind und nach Herausgabe des ID-Tokens 110 weder gelöscht noch verändert werden können. Insofern werden diese ersten Attribute 112 nachfolgend als Stammattribute der digitalen Berechtigung des ID-Token 110 bezeichnet.

Falls es sich beispielsweise bei der durch das ID-Token 110 nachweisbaren Berechtigung um die in der Praxis typische vorkommende Berechtigung zur Verwendung der Identität des Inhabers handelt, sind die Stammattribute 112 die persönlichen Daten des Inhabers und eventuell zusätzliche maschinell erfassbare Körpermerkmale, insbesondere biometrische Daten wie bspw. ein digitalisiertes Portraitfoto und/oder ein digitalisiertes Abbild eines Fingerabdrucks.

Weiterhin enthält der Speicher zweite Attribute 113, die in typischen Situationen bei der Herausgabe des ID-Tokens 110 nicht beschrieben oder festgelegt sind. Vielmehr ist der Speicher 111 im Umfang der zweiten Attribute 113 neu- oder wiederbeschreibbar. Deswegen genießen die zweiten Attribute 113 anders als die Stammattribute 112 nicht schon prinzipiell die vom ID-Provider als Herausgeber des ID-Tokens 110 vermittelte Vertrauensstellung. Der Inhalt der zweiten Attribute 113 muss deswegen weder vom ID-Provider geliefert noch bestätigt werden. Vielmehr ist vorgesehen, dass die zweiten Attribute 113 von "fremden" Providern beschrieben werden. In der weiteren Darstellung werden die zweiten Attribute 113 deshalb als Fremdattribute 113 und die "fremden" Provider als Fremdattribut-Provider bezeichnet.

Für den Zugriff auf die Fremdattribute 113 und die Stammattribute 112 im Speicher 111 weist das ID-Token 110 eine externe Schnittstelle 115, Mittel zur Authentifizierung über die externe Schnittstelle und Mittel zum lese- und schreibgeschützten Zugriff auf den Speicher 111 über die externe Schnittstelle115 auf. Die Mittel zur Authentifizierung über die externe Schnittstelle 115 können insbesondere als Implementierung eines Challenge-Response-Protokolls 114 ausgestaltet sein, wie dies aus dem Stand der Technik bekannt ist. Die Mittel zum lese- und schreibgeschützten Zugriff auf den Speicher über die externe Schnittstelle 115 können als Mittel zur kryptografischen Überprüfung von Lese- und/oder Schreibberechtigungszertifikaten ausgebildet sein, die zum Nachweis der jeweiligen Berechtigung im Rahmen eines Zugriffs über die externe Schnittstelle 115 übermittelt werden. Insbesondere können diese Mittel in an sich bekannter Weise als Prüfschlüssel 116 zur Prüfung einer digitalen Signatur der Lese- und/oder Schreibberechtigungszertifikate ausgestaltet sein.

Ferner umfasst das ID-Token 110 vorzugsweise Mittel zur Durchführung einer Benutzerauthentifizierung 116. Diese können im einfachsten Fall eine Implementierung eines Protokolls die Überprüfung einer über die Schnittstelle zugeführten Kennzahl umfassen.

Bei dem ID-Token 110 kann es sich insbesondere um ein elektronisches Sicherheitsdokument und wiederum insbesondere um einen elektronischen Personalausweis oder ein vergleichbares behördliches oder privates Identitäts- oder Berechtigungsdokument handeln.

Der Terminal-Computer 120 ist dazu eingerichtet, auf eine Eingabe eines Nutzers hin eine Anforderung für eine Transaktion zu erzeugen und über das Netzwerk 160 an den Dienst-Computer 150 zu übertragen. Vorzugsweise umfasst der Terminal-Computer 120 einen mit dem Netzwerk 160 verbundenen persönlicher Computer 122 des Nutzers oder alternativ einen vergleichbar eingerichteten öffentlichen Computer. In einem typischen Anwendungsfall kann der persönliche Computer 122 insbesondere mit einem Webbrowser oder einem vergleichbaren Benutzerprogramm ausgerüstet sein, das zur Interaktion mit dem entfernten Dienst-Computer 150 über das Netzwerk 160 geeignet ist.

In der exemplarischen Situation umfasst der Terminal-Computer 120 weiterhin eine Schnittstelle 124 zur Kommunikation mit dem ID-Token 110 über dessen vorangehend beschriebene Schnittstelle 115. Diese Schnittstelle 124 des Terminal-Computers 120 ist gemäß der vorliegend exemplarisch gewählten bevorzugten Ausgestaltung in einem separaten Lesegerät 126 eingebaut und kann insbesondere eine RFID-Schnittstelle sein. Die vom Lesegerät 126 bereitgestellte Verbindung zum persönlichen Computer 122 des Nutzers vermittelt dem ID-Token 110 eine Möglichkeit zur Kommunikation über das Netzwerk 160. Das Lesegerät 126 kann insbesondere als vertrauenswürdige Hardware ausgestaltet sein und beispielsweise Mittel zum Schutz dieser Kommunikation enthalten. Dies ist aus dem Stand der Technik bekannt und wird deswegen nicht im Einzelnen beschrieben.

Weiterhin weist der Terminal-Computer 120 eine Erfassungseinrichtung für eine Authentifizierung des Nutzers gegenüber dem ID-Token 110 auf, die in der exemplarischen Situation als Tastatur 128 zur Eingabe einer PIN oder einer vergleichbaren Kennung in baulicher Einheit mit dem Lesegerät 126 bereit gestellt ist.

Der ID-Provider-Computer 130 ist dazu eingerichtet, in Bezug auf das ID-Token 110 die Dienstleistung eines ID-Providers mittels digitaler Kommunikation über das Netzwerk 160 zu erbringen. Diese Dienstleistung besteht zusammengefasst darin, einen Vertrauensanker für die mit dem ID-Token 110 verkörperten Berechtigungen in Bezug auf dessen rechtmäßige Benutzung bereit zu stellen.

Soweit diese Berechtigungen durch Stammattribute 112 des ID-Tokens 110 beschrieben sind, bietet der Stand der Technik verschiedene Möglichkeiten, eine Vertrauensstellung von dem ID-Provider auf den Nutzer des ID-Tokens 110 zu vermitteln. Typisch wird als Voraussetzung dazu sowohl die Authentizität des ID-Tokens 110 als auch dessen rechtmäßige Benutzung geprüft. Für diese Zwecke verfügt der ID-Provider-Computer 130 in an sich bekannter Weise neben den gebräuchlichen Mitteln zur Speicherung und Verarbeitung digitaler Daten weiterhin über kryptografische Mittel 132 zum sicheren Austausch von Daten über das Netzwerk 160, Mittel zur Authentifizierung 134 mit dem ID-Token 110 und Mittel 136 zur Prüfung der Authentizität von Daten in Bezug auf das ID-Token 110.

Über das an sich bekannte Verfahren zur Vermittlung einer direkt abgeleiteten Vertrauensstellung an den Nutzer des ID-Tokens 110 hinaus unterstützt der ID-Provider-Computer 130 weiterhin ein Verfahren zum Vermitteln einer indirekt abgeleiteten Vertrauensstellung. Dazu weist der ID-Provider-Computer 130 Einrichtungen 136 zum Vermitteln einer digitalen Vertrauensstellung zum lesenden oder schreibenden Zugriff auf den Speicher 111 des ID-Tokens 110 an einen Fremdattribut-Provider auf. Diese Mittel 137 können insbesondere zum Erzeugen von Lese- und Schreibberechtigungszertifikaten ausgestaltet sein. Die damit erzeugten Lese- und Schreibberechtigungszertifikate können wiederum insbesondere mit einer digitalen Signatur versehen sein, die mit dem in dem ID-Token 110 hinterlegten Prüfschlüssel 116 verifizierbar ist.

Schließlich kann der ID-Provider-Computer 130 Mittel zum Verwalten von Daten einer Sperrliste 138 umfassen, in der Angaben zu ungültig erklärten ID-Token zusammengestellt sind. Dies stellt eine übliche Maßnahme in Bezug auf die Dienstleistung des unmittelbaren Vertrauensankers dar. Dadurch können Situationen abgebildet werden, in denen eine Berechtigung schon vor Ablauf der typisch als Stammattribut hinterlegten Gültigkeitsdauer des betreffenden ID-Tokens widerrufen wird oder anderweitig erlischt.

Der Fremdattribut-Provider-Computer 140 ist dazu eingerichtet, in Bezug auf das ID-Token 110 die Dienstleistung eines Fremdattribut-Providers durch den Austausch digitaler Daten über das Netzwerk 160 zu erbringen. Diese Dienstleistung besteht zusammengefasst darin, durch Authentisierung des ID-Tokens 110 diesen als vertrauenswürdig zu erkennen, wenn möglich durch das Auslesen einiger Stammattribute 112 und weiterer Informationen Fremdattribute 113 zu erzeugen und auf dem ID-Token zu speichern. Letzteres ist möglich, wenn Authentisierung des ID-Tokens gegenseitig war und das ID-Token die Schreibberechtigung erkannt hat.

Zunächst verfügt der Fremdattribut-Provider-Computer 140 über Mittel 142 zum Nachweis der Zughörigkeit zu einem vorgegebenen Sektor. Insbesondere kann es sich dabei um den öffentlichen Schlüssel eines Sektors 141 handeln.

Daneben kann der Fremdattribut-Provider-Computer 140 über Mittel 142 zum Nachweis einer Berechtigung zum Schreiben von Fremdattributen 113 und Lesen von Stammattributen in den bzw. aus dem Speicher 111 des ID-Tokens 110 verfügen. Insbesondere kann die Berechtigung in der vorangehend beschriebenen exemplarischen Ausgestaltung des ID-Tokens 110 durch die Übermittlung eines mit dem Prüfschlüssel 116 des ID-Tokens 110 verifizierbaren Schreib- und Leseberechtigungszertifikats 142 nachgewiesen werden.

In einer optionalen Ausgestaltung kann der Fremdattribut-Provider-Computer weiterhin über Mittel zum Nachweis einer Berechtigung zum Lesen von Stammattributen aus dem Speicher des ID-Tokens verfügen. Diese Mittel können insbesondere durch ein Leseberechtigungszertifikat verwirklicht sein, das in dem Fremdattribut-Provider-Computer zusätzlich zu dem Schreibberechtigungszertifikats gespeichert ist. Dies ist in den Zeichnungen jedoch nicht dargestellt. Eine solche Möglichkeit zum Lesen von Stammattributen kann insbesondere zweckmäßig sein, wenn die Herausgabe eines Fremdattributs von einer Identitätsprüfung, einer Altersprüfung oder einer Überprüfung eines anderen vom ID-Provider abgesicherten Merkmals abhängen soll.

Weiterhin verfügt der Fremdattribut-Provider-Computer 140 über Mittel 144 zum Erzeugen von Fremdattributen sowie über die an sich bekannten Vorkehrungen zum Übermitteln der erzeugten Fremdattribute und des zugehörigen Schreibberechtigungszertifikats 142 an das ID-Token 110 über das Netzwerk 160 und den Terminal-Computer 120. Ergänzend kann der Fremdattribut-Provider-Computer 140 Mittel zur Verifizierung von Fremdattributen 146 aufweisen, um eine Online-Verifizierung herausgegebener Fremdattribute zu ermöglichen.

Schließlich kann der Fremdattribut-Provider-Computer 140 Mittel zum Verwalten von Daten einer Sperrliste 148 umfassen, in der Angaben zu ungültig erklärten ID-Token und/oder Fremdattributen zusammengestellt sind. Diese Mittel zum Verwalten von Daten einer Sperrliste 148 können hinsichtlich der Angaben zu ungültig erklärten ID-Token ferner zu ausgestaltet sein, einen Abgleich mit den Daten der vom ID-Provider-Computer 130 verwalteten Sperrliste 138 durchzuführen. Dieser Abgleich kann push-artig erfolgen, sodass der ID-Provider-Computer 130 neue und aktualisierte Daten zum ID-Provider-Computer 130 voranschiebt. Alternativ kann der Abgleich pull-artig erfolgen, sodass der Fremdattribut-Provider-Computer 140 in periodischen Abständen neue und aktualisierte Daten oder den gesamten Datenbestand der Sperrliste 138 vom ID-Provider-Computer 130 herunterlädt. Weniger zweckmäßig ist eine Einzelabfrage des Fremdattribut-Provider-Computers 140 beim ID-Provider-Computer 130 in Bezug auf ein bestimmtes ID-Token, weil dadurch ein vermeidbares Leck für Informationen an den ID-Provider entsteht.

Der Dienst-Computer 150 ist dazu eingerichtet, die Anforderung des Nutzers für eine Transaktion über das Netzwerk 160 von dem Terminal-Computer 120 zu empfangen und zu verarbeiten.

Dazu umfasst der Dienst-Computer 150 neben den gebräuchlichen Mitteln zur Speicherung und Verarbeitung digitaler Daten weiterhin Mittel, um die Berechtigung des Nutzers zur Durchführung der Transaktion zu überprüfen. Diese Prüfung umfasst das Lesen von Fremdattributen 113 und Stammattributen 112 aus dem Speicher 111 des vom Nutzer für die Transaktion verwendeten ID-Tokens 110. Dementsprechend kann der Dienst-Computer 150 mit Mitteln zum Nachweis der Vertrauensstellung zum Lesen aus dem Speicher 111 des ID-Tokens 110 ausgerüstet sein. Insbesondere kann diese Vertrauensstellung in der vorangehend beschriebenen exemplarischen Ausgestaltung des ID-Tokens 110 durch die Übermittlung eines mit dem Prüfschlüssel 116 des ID-Tokens 110 verifizierbaren Leseberechtigungszertifikats 152 nachgewiesen werden.

Darüber hinaus verfügt der Dienst-Computer 150 über an sich bekannte Mittel zum Übermitteln einer Anforderung zum Lesen des Fremdattributs 113 aus dem Speicher 111 des ID-Tokens 110 über das Netzwerk 160, den Terminal-Computer 120 und die externe Schnittstelle 115 an das ID-Token 110.

In einer möglichen Ausgestaltung kann der Dienst-Computer 150 zudem Mittel zur Sperrlistenabfrage 154 aufweisen. Die Sperrlistenabfrage 154 kann insbesondere das Übernehmen von Daten aus den vom ID-Provider-Computer 130 und/oder Fremdattribut-Provider-Computer 140 verwalteten Daten zu den Sperrlisten 138 bzw. 148 umfassen. Die Übernahme dieser Daten kann dabei in jedem Fall wahlweise wie vorangehend erläutert push-artig oder pull-artig ausgeführt werden.

Außerdem verfügt der Dienst-Computer 150 in der exemplarischen Ausgestaltung über Mittel 156 zum Nachweis der Zughörigkeit zu einem vorgegebenen Sektor. Insbesondere kann es sich dabei um den öffentlichen Schlüssel eines Sektors 141 handeln.

In einer optionalen Ausgestaltung kann der Dienst-Computer weiterhin über Mittel zum Nachweis einer Berechtigung zum Lesen von Stammattributen aus dem Speicher des ID-Tokens verfügen. Diese Mittel können insbesondere durch ein Leseberechtigungszertifikat verwirklicht sein, das in dem Dienst-Computer zusätzlich zu dem Schreibberechtigungszertifikat gespeichert ist. Dies ist in den Zeichnungen jedoch nicht dargestellt. Eine solche Möglichkeit zum Lesen von Stammattributen kann insbesondere zweckmäßig sein, wenn neben dem Lesen des Fremdattributs eine Identitätsprüfung, eine Altersprüfung oder eine Überprüfung eines anderen vom ID-Provider abgesicherten Merkmals für die Transaktion benötigt wird.

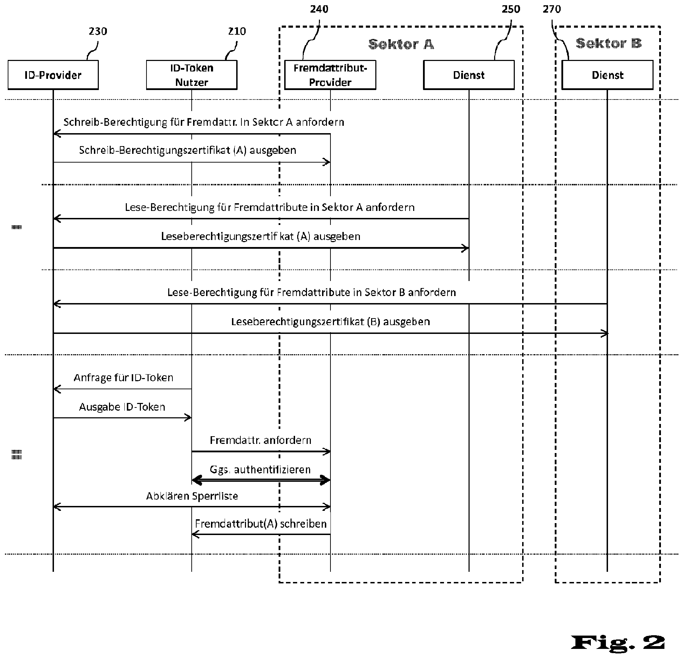

Bevorzugte exemplarische Verfahren zur Erweiterung von Attributen im Speicher eines ID-Tokens innerhalb einer Hierarchie von digitalen Vertrauensstellungen, das mit dem vorangehend beschriebenen Datenverarbeitungssystem durchführbar ist, zeigen die Fig. 2 bis 4.

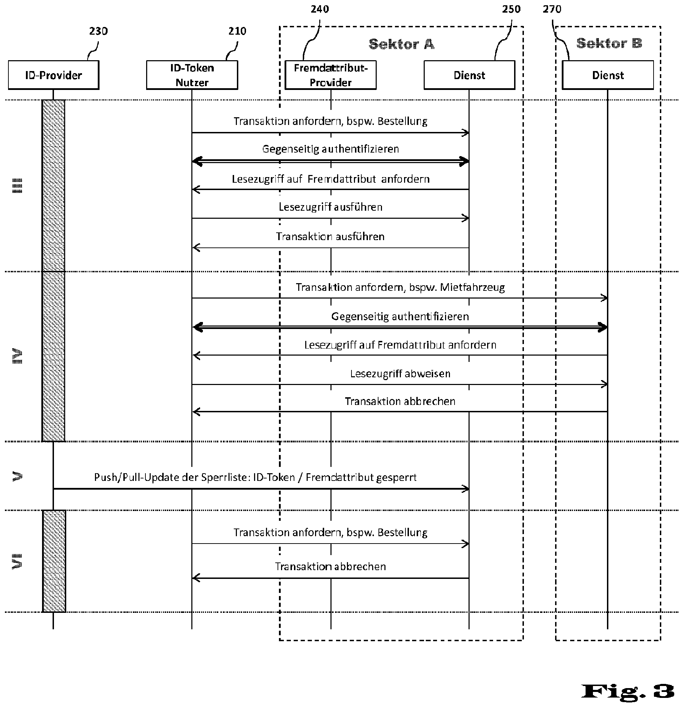

Ein erstes exemplarisches Verfahren umfasst gemäß den Fig. 2 und 3 in den Abschnitten I und II die Initialisierung der Infrastruktur des ID-Providers 230, des Fremd-Attribut-Providers 240 und von zwei Diensten 250, 270, die Initialisierung der Infrastruktur des Nutzers 210 und eine exemplarische Sitzung zur Durchführung einer Transaktion zwischen dem Nutzer 210, einem ersten Dienst 250 und dem Fremdattribut-Provider 240.

Während der Initialisierung der Infrastruktur in Abschnitt I kann beispielsweise zunächst der Fremdattribut-Provider 240 eine Anforderung für eine Schreibberechtigung in Bezug auf das ID-Token 210 an den ID-Provider 230 übertragen. Diese Anforderung wird von dem Fremdattribut-Provider-Computer 140 in einem Teilvorgang 242 erzeugt und kann den öffentlichen Schlüssel 141 des Sektors enthalten. Danach wird die Anforderung über das Netzwerk 160 an den ID-Provider-Computer 130 übertragen.

In Antwort auf die eingehende Anforderung erzeugt der ID-Provider-Computer 130 des ID-Providers 230 ein Schreibberechtigungszertifikat, das von dem Fremdattribut-Provider-Computer 140 gespeichert wird. In der exemplarischen Situation ist vorgesehen, dass dieses Schreibberechtigungszertifikat mit dem öffentlichen Schlüssel 141 des Sektors verknüpft ist. Dadurch kann das Schreibberechtigungszertifikat nur zum Schreiben von Fremdattributen für den Sektor A verwendet werden.

In einer optionalen Ausgestaltung des Verfahrens kann vorgesehen sein, dass der ID-Provider-Computer weiterhin ein Leseberechtigungszertifikat an den Fremdattribut-Provider-Computer ausgibt, das einen Lesezugriff auf bestimmte Stammattribute in dem ID-Token ermöglicht. Dies ist in den Zeichnungen jedoch nicht dargestellt.

Weiterhin kann während der Initialisierung der Infrastruktur der erste Dienst 250 im Sektor A eine Anforderung für eine Leseberechtigung in Bezug auf Fremdattribute im Speicher des ID-Tokens 110 des Nutzers 210 an den Fremdattribut-Provider-Computer 140 des Fremdattribut-Providers 240 übertragen. Diese Anforderung wird von dem Dienst-Computer 150 erzeugt und kann den öffentlichen Schlüssel 156 des Sektors enthalten. Für den ersten Dienst 250 wird hier exemplarisch eine Zugehörigkeit zum Sektor A unterstellt. Danach überträgt der Dienst-Computer 150 die erzeugte Anforderung über das Netzwerk 160 an den Fremdattribut-Provider-Computer 140.

In Antwort auf die eingehende Anforderung des ersten Diensts 250 erzeugt der ID-Provider-Computer 130 des ID-Providers 230 ein Leseberechtigungszertifikat, das an den Dienst-Computer 150 des ersten Diensts 250 zurück übertragen und dort gespeichert wird. In der exemplarischen Situation ist vorgesehen, dass dieses Leseberechtigungszertifikat mit dem öffentlichen Schlüssel 156 verknüpft ist. Dadurch kann dieses Leseberechtigungszertifikat nur zum Lesen von Fremdattributen für den Sektor A verwendet werden.

Wiederum kann in einer optionalen Ausgestaltung des Verfahrens vorgesehen sein, dass der ID-Provider-Computer zusätzlich ein Leseberechtigungszertifikat an den Dienst-Computer ausgibt, das einen Lesezugriff auf bestimmte Stammattribute in dem ID-Token ermöglicht. Dies ist in den Zeichnungen jedoch nicht dargestellt.

In gleicher Weise kann in der exemplarischen Situation ein zweiter Dienst 270 im Sektor B eine Leseberechtigung für ein Fremdattribut im Speicher des ID-Tokens 110 des Nutzers 210 verschaffen. Die Einzelheiten des dazu verwendeten Dienst-Computers können insbesondere denen des Dienst-Computers 150 des Sektors A entsprechen und sind deswegen in den Zeichnungen nicht dargestellt.

Die Initialisierung der Infrastruktur des Nutzers 210 in Abschnitt II umfasst die Anforderung des Nutzers 210 zur Ausstellung und Überlassung des ID-Tokens 110, das vom ID-Provider 230 personalisiert und an den Nutzer 210 herausgegeben wird. In dieser Situation kann der Nutzer 210 eine Anfrage zur Speicherung eines Fremdattributs 113 in dem Speicher 110 des ID-Tokens 110 stellen. Auf diese Anfrage hin führen der Nutzer 210 und der Fremdattribut-Provider 240 eine Authentifizierung durch, die beispielsweise eine zweiseitige Authentifizierung zwischen dem ID-Token 110 und dem Fremdattribut-Provider-Computer 140 sowie eine Authentifizierung zwischen dem ID-Token 110 und dem Nutzer 210 umfasst. Nachfolgend kann eine Überprüfung der Daten der Sperrliste 138 vorgesehen sein, um im Fall der Ungültigkeit des ID-Tokens 110 das Verfahren an dieser Stelle abzubrechen.

In der optionalen Ausgestaltung des Verfahrens kann vorgesehen sein, dass der Fremdattribut-Provider versucht, diejenigen Stammattribute aus dem Speicher 111 des ID-Tokens auszulesen, für die er vom ID-Provider gemäß der vorangehend erwähnten optionalen Ausgestaltung eine Berechtigung erhalten hat. Die Fortsetzung des Verfahrens kann ferner von dem Erfolg dieses Leseversuchs und insbesondere dem Ergebnis einer Prüfung der gelesenen Stammattribute abhängig gemacht werden. Dies ist in den Zeichnungen jedoch nicht dargestellt.

Andernfalls führt der Fremdattribut-Provider 240 das Schreiben des Fremdattributs 113 in den Speicher 111 des ID-Tokens 110 aus. Dazu erzeugt der Fremdattribut-Provider-Computer 140 das Fremdattribut mit den dazu vorgesehenen Mitteln 144 und überträgt es zusammen mit dem Schreibberechtigungszertifikat 142 über das Netzwerk 160, den persönlichen Computer 122 und das Lesegerät 126 an die externe Schnittstelle 115 des ID-Tokens 110.

Das ID-Token 110 überprüft mit den dazu vorgesehenen und vorangehend beschriebenen Mitteln 116 die Gültigkeit des übermittelten Schreibberechtigungszertifikats 142 und schreibt gegebenenfalls das übermittelte Fremdattribut 113 in den Speicher 111.

Danach ist die Infrastruktur für eine exemplarische Sitzung zur Durchführung einer Transaktion zwischen dem Nutzer 210 und einem ersten Dienst 250 vorbereitet.

Eine erste einwandfreie Sitzung verdeutlicht der Abschnitt III in Fig. 3. Darin leitet der Nutzer 210 die Sitzung durch die Übertragung einer Anforderung für eine Transaktion an den ersten Dienst 250 in Sektor A ein. Beispielsweise erstellt der Nutzer 210 diese Anforderung mit dem Terminal-Computer 120 und überträgt sie von dort über das Netzwerk 160 an den Dienst-Computer 150 des ersten Diensts 250. Anschließend führen der Nutzer 210 und der erste Dienst 250 eine Authentifizierung durch, die beispielsweise eine zweiseitige Authentifizierung zwischen dem ID-Token 110 und dem Dienst-Computer 150 sowie eine Authentifizierung zwischen dem ID-Token 110 und dem Nutzer 210 umfasst. Nach erfolgreichem Abschluss der Authentifizierung überträgt der Dienst-Computer 150 eine Leseanforderung an das ID-Token 110, die in der exemplarischen Situation das Leseberechtigungszertifikat 152 enthält. Das ID-Token 110 prüft das Leseberechtigungszertifikat 152 mit den vorangehend beschriebenen Mitteln 116 und liefert gegebenenfalls das Fremdattribut 113 über die externe Schnittstelle 115, den Terminal-Computer 120 und das Netzwerk 160 an den Dienst-Computer 150 des ersten Diensts 250.

Der Dienst-Computer 120 führt schließlich die angeforderte Transaktion gemäß dem gelesenen Fremdattribut 113 aus. Zur Veranschaulichung kann hier angenommen werden, dass das Fremdattribut 113 einen Gutschein eines Rabattsystems in Sektor A codiert, der im Rahmen eines in der Transaktion ausgeführten Einkaufs aufgebraucht wird.

In einer der vorangehend erwähnten optionalen Ausgestaltung des Verfahrens kann vorgesehen sein, dass Dienst-Computer versucht, diejenigen Stammattribute aus dem Speicher des ID-Tokens auszulesen, für die er vom ID-Provider eine Berechtigung erhalten hat. Die Ausführung der Transaktion kann ferner von dem Erfolg dieses Leseversuchs und insbesondere dem Ergebnis einer Prüfung der gelesenen Stammattribute und/oder dem Inhalt der gelesenen Stammattribute abhängig gemacht werden. Dies ist in den Zeichnungen jedoch nicht dargestellt.

Eine erste fehlerhafte Sitzung verdeutlicht der Abschnitt IV in Fig. 3. Darin hat der Nutzer 210 die Transaktion beim zweiten Dienst 270 in Sektor B angefordert. Das dazu erforderliche Fremdattribut 113 kann jedoch von Dienst-Computer des zweiten Diensts 270 nicht gelesen werden, weil das dazu übermittelte Leseberechtigungszertifikat nicht zum Sektor des Fremdattributs gehört. Die Prüfung des Leseberechtigungszertifikats verläuft erfolglos und die Transaktion wird vom Dienst-Computer des zweiten Diensts 270 deswegen abgebrochen.

Eine zweite fehlerhafte Sitzung verdeutlichen die Abschnitte V und VI in Fig. 3. Darin führt zunächst der erste Dienst 150 eine Abfrage an die vom ID-Provider 230 im ID-Provider-Computer 130 verwalteten Daten der Sperrliste 138 durch. Vorliegend wird unterstellt, dass diese Abfrage für das ID-Token 110 ein positives Ergebnis liefert. Das bedeutet für den Dienst 250, dass dem ID-Token 110 vom ID-Provider 230 keine Vertrauensstellung mehr vermittelt wird. Das ID-Token 110 ist demnach für die im nächsten Schritt vom Nutzer 210 angeforderte Transaktion ungültig. Konsequent wird die Transaktion vom ersten Dienst 250 abgebrochen.

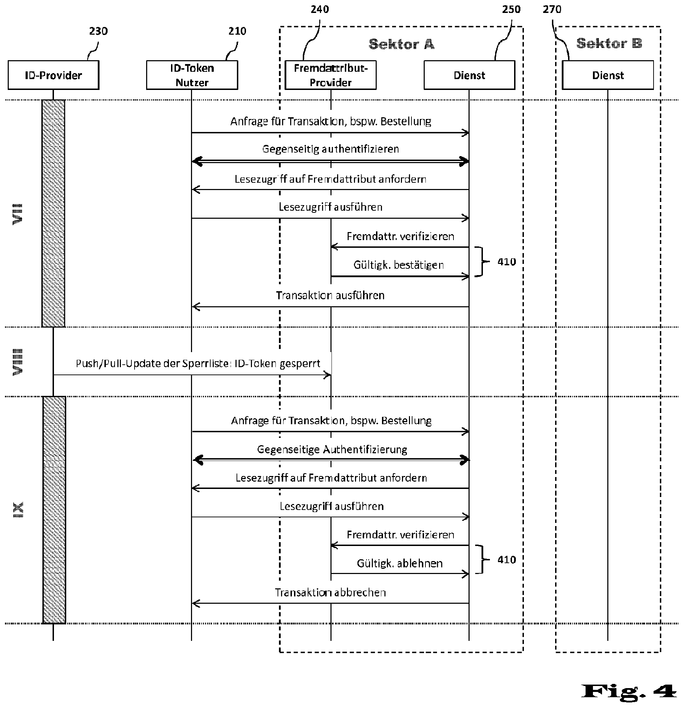

Eine mögliche Ausgestaltung des Verfahrens nach in Abschnitt III ist in Fig. 4 in den Abschnitten VII, VIII und IX veranschaulicht. Darin ist nach dem Lesezugriff des Dienst-Computers 150 auf das Fremdattribut 113 dessen Überprüfung in einem zusätzlichen Protokoll 410 zwischen dem Fremdattribut-Provider 240 und dem Dienst 250 vorgesehen. Im Rahmen dieses Protokolls kann auch eine Negativprüfung in Bezug auf eine von dem Fremdattribut-Provider-Computer 140 verwaltete Fremdattribut-Sperrliste 148 ausgeführt werden. Der in Abschnitt VII gezeigte Ablauf entspricht einer einwandfreien Ausführung der Transaktion. Im Abschnitt VIII ist die Aktualisierung der ID-Token-Sperrliste bei dem Fremdattribut-Provider 240 in einem push-artigen Vorgang durch den ID-Provider 230 angedeutet. Es wird unterstellt, dass das ID-Token des Nutzers 210 nun in dieser ID-Token-Sperrliste bezeichnet ist. Die anschließend in Abschnitt IX angedeutete Transaktion schlägt wegen der zusätzlichen Prüfung im Protokoll 410 fehl.

### Bezugszeichenliste

- 100: ID-Token
- 111: Speicher
- 112: Stammattribut
- 113: Fremdattribut
- 114: Challenge-Response-Protokoll
- 115: Externe Schnittstelle
- 116: Prüfschlüssel
- 120: Terminal-Computer
- 122: Persönlicher Computer
- 124: Schnittstelle
- 126: Lesegerät
- 128: Tastatur
- 130: ID-Provider-Computer
- 132: Kryptografisches Protokoll
- 134: Challenge-Response-Protokoll
- 136: Signaturprüfung
- 137: Lese- und Schreibberechtigungszertifikat-Erzeugung
- 138: ID-Token-Sperrliste
- 140: Fremdattribut-Provider-Computer
- 141: Öffentlicher Schlüssel des Sektors "A"
- 142: Schreib- und Leseberechtigungszertifikat
- 146: Mittel zur Fremdattribut-Verifizierung
- 148: Fremdattribut-Sperrliste
- 150: Dienst-Computer
- 152: Leseberechtigungszertifikat
- 154: Sperrlistenabfrage
- 210: Nutzer
- 230: ID-Provider
- 240: Fremdattribut-Provider
- 250, 270: Dienste
- 410: Protokoll zur Verifizierung des Fremdattributs

## Patentansprüche

1. Verfahren zur Erweiterung von Attributen (112, 113) im Speicher (111) eines ID-Tokens (110) innerhalb einer Hierarchie von digital codierten Vertrauensstellungen durch:
- Bereitstellen des ID-Tokens (110), wobei das ID-Token (110) mit einem Speicher (111), einer externen Schnittstelle (115), Einrichtungen zur Authentifizierung über die externe Schnittstelle und Einrichtungen zum lese- und schreibgeschützten Zugriff auf den Speicher (111) über die externe Schnittstelle (115) ausgestattet ist;
- Vermitteln einer digital codierten Vertrauensstellung (142) zum Schreiben eines Fremdattributs (113) in den Speicher (111) des ID-Tokens (110) durch einen ID-Provider-Computer (130) an einen Fremdattribut-Provider-Computer (140);
- Durchführen eines kryptografischen Protokolls zur Authentifizierung des ID-Tokens (110) gegenüber dem Fremdattribut-Provider-Computer (140); und
- Nachweis der digital codierten Vertrauensstellung (142) zum Schreiben des Fremdattributs (113) in den Speicher (111) des ID-Tokens (110) und Schreiben des Fremdattributs (113) in den Speicher (111) des ID-Tokens (110) über dessen externe Schnittstelle (115) durch den Fremdattribut-Provider-Computer (140),
weiterhin umfassend die Nutzung des Fremdattributs (113) für eine Transaktion zwischen einem mit dem ID-Token (110) über dessen externe Schnittstelle (115) verbundenen Terminal-Computer (120) und einem Dienst-Computer (150) mit:
- Vermitteln einer digital codierten Vertrauensstellung (152) zum Lesen des Fremdattributs (113) aus den Speicher des ID-Tokens (110) durch den ID-Provider-Computer (130) an den Dienst-Computer (150);
- Anfordern der Transaktion durch den Terminal-Computer (120) bei dem Dienst-Computer (150);
- Durchführen eines kryptografischen Protokolls über die externe Schnittstelle (115) des ID-Tokens (110) zur Authentifizierung des ID-Tokens (110) gegenüber dem Terminal-Computer (120) und/oder dem Dienst-Computer (150);
- Nachweis der Vertrauensstellung zum Lesen des Fremdattributs (113) und Lesen des Fremdattributs (113) aus dem Speicher des ID-Tokens (110) über die externe Schnittstelle (115) durch den Dienst-Computer (150); und
- Ausführen der angeforderten Transaktion durch den Dienst-Computer (150).

2. Verfahren nach Anspruch 1, worin als Voraussetzung für das Schreiben des Fremdattributs (113) durch den Fremdattribut-Provider-Computer (140) eine Negativprüfung auf Daten einer von dem ID-Provider-Computer (130) verwalteten ID-Token-Sperrliste (138) durchgeführt wird.

3. Verfahren nach einem der vorangehenden Ansprüche, weiterhin umfassend den Nachweis einer Berechtigung zum Lesen einer Menge von Stammattributen (112) aus dem Speicher (111) des ID-Tokens (110) und das Lesen dieser Stammattribute (112) durch den Fremdattribut-Provider-Computer (140) und/oder den ID-Provider-Computer (130).

4. Verfahren nach Anspruch 3, wobei das Schreiben des Fremdattributs (113) in Abhängigkeit von den gelesenen Stammattributen (112) erfolgt und insbesondere das Fremdattribut (113) gemäß den gelesenen Stammattributen (112) erzeugt wird.

5. Verfahren nach Anspruch 1, worin als Voraussetzung für das Lesen des Fremdattributs (113) durch den Dienst-Computer (150) eine Negativprüfung auf Daten einer vom ID-Provider-Computer (130) verwalteten ID-Token-Sperrliste (138) und/oder einer vom Fremdattribut-Provider-Computer (140) verwalteten Fremdattribut-Sperrliste (148) durchgeführt wird.

6. Verfahren nach Anspruch 1 oder 5, weiterhin umfassend das Vermitteln einer digital codierten Vertrauensstellung (142) zum Lesen einer Menge von Stammattributen (112) aus dem Speicher (111) des ID-Tokens (110) durch den ID-Provider-Computer (130) an den Dienst-Computer (150) sowie den Nachweis dieser Vertrauensstellung gegenüber dem ID-Token (110) und das Lesen dieser Stammattribute (112) durch den Dienst-Computer (140) als Voraussetzung für die Ausführung der angeforderten Transaktion.

7. Verfahren nach einem der Ansprüche 1 bis 6, worin als Voraussetzung für das Lesen des Fremdattributs (113) durch den Dienst-Computer (150) weiterhin eine Authentifizierung des Terminal-Computers (120) und/oder des Dienst-Computers (150) gegenüber dem ID-Token (110) durchgeführt wird.

8. Verfahren nach einem der Ansprüche 1 bis 6, worin als Voraussetzung für das Abschließen der Transaktion die Gültigkeit des gelesenen Fremdattributs (113) durch den Dienst-Computer (150) festgestellt wird.

9. Verfahren nach Anspruch 8, worin das Feststellen der Gültigkeit des Fremdattributs (113) die erfolgreiche Überprüfung einer digitalen Signatur des Fremdattributs (113) umfasst.

10. Verfahren nach einem der Ansprüche 8 und9, worin das Feststellen der Gültigkeit des Fremdattributs (113) die Ausführung eines Protokolls zwischen dem Dienst-Computer (150) und dem Fremdattribut-Provider-Computer (140) und insbesondere eine Negativprüfung auf Daten einer vom Fremdattribut-Provider-Computer (140) verwalteten Fremdattribut-Sperrliste (148) umfasst.

11. Verfahren nach einem der Ansprüche 1 bis 10, worin als Voraussetzung für das Lesen des Fremdattributs (113) durch den Dienst-Computer (150) weiterhin eine persönliche Authentifizierung des Nutzers (210) gegenüber dem ID-Token (110) über eine Erfassungseinrichtung (128) des Terminalcomputers (120) ausgeführt wird.

12. Verfahren nach einem der vorangehenden Ansprüche, worin die digital codierte Vertrauensstellung zum lesenden und/oder schreibenden Zugriff auf den Speicher (111) des ID-Tokens (110) durch Übermittlung digitaler Lese- bzw. Schreibberechtigungszertifikate (142, 152) vermittelt und/oder nachgewiesen wird und das ID-Token (110) mit Einrichtungen zum Prüfen der Lese- bzw. Schreibberechtigungszertifikate (142, 152) bereitgestellt wird.

13. Computerprogrammprodukt, insbesondere digitales Speichermedium mit digital codierten Instruktionen, durch deren Ausführung ein Datenverarbeitungssystem mit einem ID-Token (110), einem Terminal-Computer (120), einem ID-Provider-Computer (130), einem Fremdattribut-Provider-Computer (140), einem Dienst-Computer (150) und einem Netzwerk (160) gemäß einem der Ansprüche 1 bis 10 betreibbar ist.

## Claims

1. A method for extending attributes (112, 113) in the memory (111) of an ID token (110) within a hierarchy of digitally coded trust settings by:
- providing the ID token (110), wherein the ID token (110) is equipped with a memory (111), an external interface (115), devices for authentication via the external interface and devices for read- and write-protected access to the memory (111) via the external interface (115);
- communicating, to a foreign attribute provider computer (140), a digitally coded trust setting (142) for writing a foreign attribute (113) to the memory (111) of the ID token (110) by an ID provider computer (130);
- carrying out a cryptographic protocol for authenticating the ID token (110) to the foreign attribute provider computer (140); and
- verifying the digitally coded trust setting (142) for writing the foreign attribute (113) to the memory (111) of the ID token (110) and writing the foreign attribute (113) to the memory (111) of the ID token (110) via the external interface (115) thereof by the foreign attribute provider computer (140),
further comprising the use of the foreign attribute (113) for a transaction between a terminal computer (120) connected to the ID token (110) via the external interface (115) thereof and a service computer (150) with the steps of:
- communicating, to the service computer (150), a digitally coded trust setting (152) for reading the foreign attribute (113) from the memory of the ID token (110) by the ID provider computer (130);
- requesting the transaction to the service computer (150) by the terminal computer (120);
- carrying out a cryptographic protocol via the external interface (115) of the ID token (110) to authenticate the ID token (110) to the terminal computer (120) and/or the service computer (150);
- verifying the trust setting for reading the foreign attribute (113) and reading the foreign attribute (113) from the memory of the ID token (110) via the external interface (115) by the service computer (150); and
- carrying out the requested transaction by the service computer (150).

2. The method according to claim 1, wherein a negative check of data of an ID token blacklist (138) managed by the ID provider computer (130) is carried out as a precondition for the writing of the foreign attribute (113) by the foreign attribute provider computer (140).

3. The method according to one of the preceding claims, further comprising the verification of an authorisation to read an amount of master attributes (112) from the memory (111) of the ID token (110) and the reading of these master attributes (112) by the foreign attribute provider computer (140) and/or the ID provider computer (130).

4. The method according to claim 3, wherein the foreign attribute (113) is written depending on the read master attributes (112), and in particular the foreign attribute (113) is produced in accordance with the read master attributes (112).

5. The method according to claim 1, wherein a negative check of data of an ID token blacklist (138) managed by the ID provider computer (130) and/or of a foreign attribute blacklist (148) managed by the foreign attribute provider computer (140) is carried out as a precondition for the reading of the foreign attribute (113) by the service computer (150).

6. The method according to claim 1 or 5, further comprising a step of communicating, to the service computer (150), a digitally coded trust setting (142) for reading an amount of master attributes (112) from the memory (111) of the ID token (110) by the ID provider computer (130) and also verifying this trust setting to the ID token (110), and reading of these master attributes (112) by the service computer (140) as a precondition for carrying out the requested transaction.

7. The method according to one of claims 1 to 6, wherein an authentication of the terminal computer (120) and/or of the service computer (150) to the ID token (110) is carried out as a precondition for the reading of the foreign attribute (113) by the service computer (150).

8. The method according to one of claims 1 to 6, wherein the validity of the read foreign attribute (113) is determined by the service computer (150) as a precondition for the completion of the transaction.

9. The method according to claim 8, wherein the determination of the validity of the foreign attribute (113) comprises the successful checking of a digital signature of the foreign attribute (113).

10. The method according to one of claims 8 and 9, wherein the determination of the validity of the foreign attribute (113) comprises carrying out a protocol between the service computer (150) and the foreign attribute provider computer (140) and in particular a negative check of data of a foreign attribute blacklist (148) managed by the foreign attribute provider computer (140).

11. The method according to one of claims 1 to 10, wherein a personal authentication of the user (210) to the ID token (110) via a detection means (128) of the terminal computer (120) is furthermore carried out as a precondition for the reading of the foreign attribute (113) by the service computer (150).

12. The method according to one of the preceding claims, wherein the digitally coded trust setting for read and/or write access to the memory (111) of the ID token (110) is communicated and/or verified by transmitting digital read and/or write authorisation certificates (142, 152) and the ID token (110) is provided with means for checking the read and/or write authorisation certificates (142, 152).

13. A computer program product, in particular a digital storage medium with digitally coded instructions, the execution of which causes a data processing system comprising an ID token (110), a terminal computer (120), an ID provider computer (130), a foreign attribute provider computer (140), a service computer (150) and a network (160) according to one of claims 1 to 10 to be operable.

## Revendications

1. Procédé d'extension d'attributs (112, 113) dans la mémoire (111) d'un jeton d'ID (110) au sein d'une hiérarchie de positions de confiance codées numériquement, par :
- la mise au point du jeton d'ID (110), où le jeton d'ID (110) est équipé d'une mémoire (111), d'une interface externe (115), d'équipements pour l'authentification par le biais de l'interface externe et d'équipements pour l'accès protégé en lecture et en écriture à la mémoire (111) par le biais de l'interface externe (115) ;
- la communication d'une position de confiance (142) codée numériquement pour l'écriture d'un attribut externe (113) dans la mémoire (111) du jeton d'ID (110) par un ordinateur fournisseur d'ID (130) à un ordinateur fournisseur d'attributs externes (140) ;
- l'exécution d'un protocole cryptographique pour l'authentification du jeton d'ID (110) vis-à-vis de l'ordinateur fournisseur d'attributs externes (140) ; et
- la détection de la position de confiance (142) codée numériquement pour l'écriture de l'attribut externe (113) dans la mémoire (111) du jeton d'ID (110) et l'écriture de l'attribut externe (113) dans la mémoire (111) du jeton d'ID (110) par le biais de son interface externe (115) par l'ordinateur fournisseur d'attributs externes (140),
comprenant en outre l'utilisation de l'attribut externe (113) pour une transaction entre un ordinateur terminal (120) relié avec le jeton d'ID (110) par le biais de son interface externe (115) et un ordinateur de service (150) avec :
- la communication d'une position de confiance (152) codée numériquement pour la lecture de l'attribut externe (113) à partir de la mémoire du jeton d'ID (110), par l'ordinateur fournisseur d'ID (130), à l'ordinateur de service (150) ;
- la demande de transaction par l'ordinateur terminal (120) auprès de l'ordinateur de service (150) ;
- l'exécution d'un protocole cryptographique par le biais de l'interface externe (115) du jeton d'ID (110) pour l'authentification du jeton d'ID (110) vis-à-vis de l'ordinateur terminal (120) et/ou de l'ordinateur de service (150) ;
- la détection de la position de confiance pour la lecture de l'attribut externe (113) et la lecture de l'attribut externe (113) à partir de la mémoire du jeton d'ID (110) par le biais de l'interface externe (115) par l'ordinateur de service (150) ; et
- l'exécution de la transaction demandée par l'ordinateur de service (150).

2. Procédé selon la revendication 1, dans lequel, en tant que condition préalable pour l'écriture de l'attribut externe (113) par l'ordinateur fournisseur d'attribut externe (140), un contrôle négatif de données d'une liste d'exclusion de jeton d'ID (138) gérée par l'ordinateur fournisseur d'ID (130) est exécuté.

3. Procédé selon l'une des revendications précédentes, comprenant en outre la communication d'une autorisation pour la lecture d'une quantité d'attributs d'origine (112) à partir de la mémoire (111) du jeton d'ID (110) et la lecture de ces attributs d'origine (112) par l'ordinateur fournisseur d'attributs externes (140) et/ou l'ordinateur fournisseur d'ID (130).

4. Procédé selon la revendication 3, dans lequel l'écriture de l'attribut externe (113) a lieu en fonction des attributs d'origine (112) lus et en particulier, l'attribut externe (113) est généré d'après les attributs d'origine (112) lus.

5. Procédé selon la revendication 1, dans lequel, en tant que condition préalable pour la lecture de l'attribut externe (113) par l'ordinateur de service (150), un contrôle négatif de données d'une liste d'exclusion de jeton d'ID (138) gérée par l'ordinateur fournisseur d'ID (130), et/ou d'une liste d'exclusion d'attributs externes (148) gérée par l'ordinateur fournisseur d'attributs externes (140), est exécuté.

6. Procédé selon la revendication 1 ou la revendication 5, comprenant en outre la communication d'une position de confiance (142) codée numériquement pour la lecture d'une quantité d'attributs d'origine (112) à partir de la mémoire (111) du jeton d'ID (110) par l'ordinateur fournisseur d'ID (130) vers l''ordinateur de service (150), ainsi que la détection de cette position de confiance vis-à-vis du jeton d'ID (110) et la lecture de ces attributs d'origine (112) par l'ordinateur de service (140) en tant que condition préalable à l'exécution de la transaction demandée.

7. Procédé selon l'une des revendications 1 à 6, dans lequel, en tant que condition préalable pour la lecture de l'attribut externe (113) par l'ordinateur de service (150), une authentification de l'ordinateur terminal (120) et/ou de l'ordinateur de service (150) vis-à-vis du jeton d'ID (110) est en outre exécutée.

8. Procédé selon l'une des revendications 1 à 6, dans lequel, en tant que condition préalable pour la réalisation de la transaction, la validité de l'attribut externe (113) lu est vérifiée par l'ordinateur de service (150).

9. Procédé selon la revendication 8, dans lequel la vérification de la validité de l'attribut externe (113) comprend la vérification réussie d'une signature numérique de l'attribut externe (113).

10. Procédé selon l'une des revendications 8 et 9, dans lequel la vérification de la validité de l'attribut externe (113) comprend l'exécution d'un protocole entre l'ordinateur de service (150) et l'ordinateur fournisseur d'attributs externes (140) et en particulier un contrôle négatif de données d'une liste d'exclusion d'attributs externes (148) gérée par l'ordinateur fournisseur d'attributs externes (140).

11. Procédé selon l'une des revendications 1 à 10, dans lequel, en tant que condition préalable pour la lecture de l'attribut externe (113) par l'ordinateur de service (150), une authentification personnelle de l'utilisateur (210) vis-à-vis du jeton d'ID (110) est en outre exécutée par le biais d'un dispositif de détection (128) de l'ordinateur terminal (120).

12. Procédé selon l'une des revendications précédentes, dans lequel la position de confiance codée numériquement pour l'accès de lecture et/ou d'écriture à la mémoire (111) du jeton d'ID (110) est communiquée, et/ou est détectée, par la transmission de certificats d'autorisation de lecture, respectivement, d'écriture (142, 152) numériques et le jeton d'ID (110) est fourni avec des équipements pour la vérification des certificats d'autorisation de lecture, respectivement, d'écriture (142, 152).

13. Produit-programme informatique, en particulier, support de stockage numérique doté d'instructions codées numériquement, par l'exécution desquelles un système de traitement de données muni d'un jeton d'ID (110), d'un ordinateur terminal (120), d'un ordinateur fournisseur d'ID (130), d'un ordinateur fournisseur d'attributs externes (140), d'un ordinateur de service (150) et d'un réseau (160) peut être mis en fonction selon l'une des revendications 1 à 10.
